# EUROPÄISCHE PATENTSCHRIFT

(11) **EP 0 626 984 B1**
(45) Veröffentlichungstag und Bekanntmachung des Hinweises auf die Patenterteilung: **10.04.1996**
(21) Anmeldenummer: 93917388.6
(22) Anmeldetag: 09.02.1993
(51) Int. Cl.: C09D 7/00

(54) **POLYAMIDOAMINE IN UMLAUFWÄSSERN VON NASSABSCHEIDERN**
POLYAMIDOAMINES IN THE CIRCULATING WATERS OF WET SEPARATORS
POLYAMIDOAMINES DANS LES EAUX DE CIRCULATION DE SEPARATEURS PAR VOIE HUMIDE

(30) Priorität: 18.02.1992 DE 4204804
(43) Veröffentlichungstag der Anmeldung: 07.12.1994
(73) Patentinhaber: Henkel Kommanditgesellschaft auf Aktien, D-40191 Düsseldorf (DE)
(72) Erfinder: BREUER, Wolfgang, D-41352 Korschenbroich (DE); FEHR, Hans, D-4000 Düsseldorf 13 (DE); GEKE, Jürgen, D-4000 Düsseldorf 1 (DE); MARGEIT, Ragnar, D-4000 Duisburg 14 (DE); SCHIEFERSTEIN, Ludwig, D-4030 Ratingen 1 (DE)
(86) Internationale Anmeldenummer: EP9300304
(87) Internationale Veröffentlichungsnummer: WO9316140

(56) Entgegenhaltungen:
- EP-A- 0 158 896
- EP-A- 0 163 108

## Beschreibung

Die Erfindung betrifft die Verwendung von Polyamidoaminen in Umlaufwässern von Naßabscheidern für Spritzlackieranlagen.

Bei der Aufbringung von Lacken, Wachsen oder ähnlichen, nicht wasserlösliche organische Substanzen enthaltenden Beschichtungsmitteln auf metallische Oberflächen oder Kunststoffoberflächen, z.B. in der Automobilindustrie, gelingt es nicht, die Lacke bzw. Beschichtungsmittel restlos auf die zu beschichtenden Teile aufzubringen. Speziell bei der Lackierung von Kraftfahrzeug-Karosserien fällt in den Lackspritzkabinen sogenanntes "Overspray" an, das mittels Wasser aus den Lackspritzkabinen entfernt und in ein sogenanntes "Beruhigungsbecken" gespült wird. Um einerseits die Funktion der wasserführenden Leitungs-, Düsen - und Berieselungssysteme durch klebende Lackpartikel nicht zu stören und andererseits das umlaufende Wasser von den aufgenommenen Inhaltsstoffen zu entsorgen, müssen zur Koagulierung der genannten Stoffe dem Wasser Mittel zugegeben werden. Diese Zugabe sollte in einem Arbeitsgang die Entklebung der verspritzten und vom Wasser aufgenommenen Lackpartikel und deren Agglomeration zu einem austragungsfähigen Koagulat bewirken.

Zur Koagulierung herkömmlicher, vor allem in der Automobilindustrie verwendeter Lacke steht eine Reihe von neutralen und alkalischen Produkten zur Verfügung. Um eine Koagulierung, d.h. Entklebung, der Lackpartikel und deren Agglomeration zu einem austragungsfähigen Koagulat, zu erreichen, wurden dem in den Lackspritzkabinen und angeschlossenen Leitungen und Aggregaten umlaufenden Wasser bisher pulverförmige oder flüssige alkalische sowie neutrale Produkte zugesetzt.

Die bis dahin bekannten Mittel wiesen bei ihrer Verwendung zur Koagulation herkömmlicher Lacke eine Reihe von Nachteilen auf: So benötigten sie eine relativ lange Zeit, um die Lackpartikelchen zu koagulieren und das zur Austragung überschüssiger Lacknebel verwendete Wasser befriedigend zu entsorgen. Häufig erzwungene Badwechsel werden zunehmend als nachteilig angesehen. Da aus wassertechnischen Gründen eine Verlängerung der Standzeit der Entsorgungsbäder anzustreben ist, ist eine Mitverwendung von korrosiven Substanzen, die sich schnell in den Entsorgungsbädern anreichern und damit die Funktionsfähigkeit der Anlage aus verschiedenen Gründen beeinträchtigen, unerwünscht.

In den bisher aus dem Stand der Technik bekannten Verfahren zur Koagulation von Lacken und Beschichtungsmitteln hing es weitgehend von den vorhandenen technischen Anlagen ab, ob entweder ein Lackkoagulierungsmittel verwendet wurde, das das Koagulat im Beruhigungsbecken flotierte, d.h. zum Aufschwimmen brachte, oder ob ein Koaguliermittel verwendet werden mußte, durch das das Koagulat sedimentierte. Im ersteren Fall war ein Abschöpfen des Koagulats von der Wasseroberfläche möglich, während im letzteren Fall die sedimentierten Koagulate mittels eines Kratzbandes vom Beckenboden abgeräumt wurden. Zunehmend kamen jedoch Lackentsorgungslinien in Gebrauch, in denen es erforderlich war, die entklebten und koagulierten Lackpartikel in einer gleichmäßigen Dispersion zu halten. Je nach Lackqualität und Lackart war es somit erforderlich, das spezifische Verhalten der Lackpartikel im Einzelfall dadurch zu beeinflussen, daß man zur Flotierung neigende Lacke stärker sedimentierte, so daß eine gleichmäßige Dispersion erhalten werden konnte, oder zur Sedimentation neigende Lacke zu veranlassen, stärker aufzuschwimmen und damit ebenfalls in Dispersion zu belassen. (J. Geke in Oberfläche + JOT, 11 1986, S. 43 bis 46).

Zur Koagulierung herkömmlicher, vor allem in der Automobilindustrie verwendeter Lacke stehen eine Reihe neutraler und alkalischer Produkte zur Verfügung. Um eine Koagulation, d.h. Entklebung der Lackpartikel und deren Agglomeration zu einem austragungsfähigen Koagulat, zu erreichen, wurden im Stand der Technik dem umlaufenden Wasser alkalische pulverförmige und alkalische flüssige Produkte oder pulverförmige neutrale Produkte zugesetzt. So werden in der GB-A-1 512 022 flockulierende, d.h. den Zusammenschluß von Teilchen unter Einwirkung intermolekularer brückenbildender Makromoleküle bewirkende Agenzien, beschrieben. Diese setzen sich zusammen aus als Klärmittel wirkenden anorganischen Metallsalzen (Eisen(II)-chlorid oder Aluminiumsulfat) und organischen kationischen Polymeren, wie Polyvinylpyridin oder Polyaminen, in wäßriger Lösung.

Aus der Lehre der DE-A-33 16 878 sind flüssige Einkomponenten-Koaguliermittel bekannt, die Calcium- und/oder Magnesium-Nitrate, -Chloride und/oder -Sulfate sowie Polyethylenimine enthalten, die durch Protonierung oder Alkylierung kationisch modifiziert sind.

Speziell die Entsorgung von Zweikomponenten-Polyurethanlacken bereitete in der Vergangenheit immer wieder Schwierigkeiten. Zur Entsorgung von Nebeln derartiger Lacke und Beschichtungsmaterialien wurden in der DE-A-34 12 763 Mittel vorgeschlagen, die Cyanamid und/oder Dicyandiamid und/oder Cyanamidsalze in Verbindung mit üblicherweise in derartigen Koaguliermitteln enthaltenen Stoffen enthalten.

In letzter Zeit finden zunehmend Schichtsilikate verschiedenster Art, wie Bentonite (US-A-42 20 456), Hectorite (EP-B-193 668), Montmorillonite (US-A-46 29 572), Kaoline (US-A-43 80 495) oder Smectite (US-A-47 01 220) Verwendung als Lackkoagulier- und Entklebungsmittel. Nach der Lehre der DE-C-38 17 251 kann auch Tonerde, insbesondere Böhmit oder Pseudoböhmit, als Lackentklebungs- und Sedimentationsmittel eingesetzt werden.

Aus der Lehre der US-A-44 96 374 und der EP-A-117 586 ist weiterhin bekannt, daß man Talkum in Kombination mit Calciumoxid, -hydroxid, -carbonat und/oder Zinkstearat, zum Koagulieren und Abscheiden von High Solid-Lacken einsetzen kann. Weiterhin ist aus der Lehre der DE-C-34 21 289 und der DE-C-27 58 873 bekannt, daß man Wachs, insbesondere Montanwachs oder Carnaubawachs, in Kombination mit Paraffinabkömmlingen zum Entkleben und Koagulieren von Kunstharzlackanteilen in Naßabscheidern von Spritzlackieranlagen einsetzen kann.

Aus der Lehre der DE-A-38 10 166 der Anmelderin sind ferner wäßrige Konzentrate bekannt, die ein Ethylen-Acrylsäure-Copolymerisat zur Koagulation von Lacken und anderen organischen Beschichtungsmitteln enthalten.

Trotz der Vielzahl der im Stand der Technik vorgeschlagenen Rezepturen zeigte es sich jedoch, daß bei deren Anwendung zur Koagulation von Lacken und anderen Beschichtungsmitteln erhebliche Nachteile in Kauf genommen werden mußten. So wurden bei einer Reihe von Rezepturen einzelne Komponenten unter den bei der Anwendung üblichen Bedingungen hydrolysiert. Damit wurden Hydrolyseprodukte freigesetzt, die zu erheblicher Schaumbildung Anlaß geben. Dies führt dann dazu, daß die Anlagen zur Wasserberieselung von Lackspritzkabinen zeitweise stillgelegt werden müssen. Derartige Ausfälle können jedoch nicht in Kauf genommen werden.

Ergänzend dazu zeigte es sich bei einer Reihe von anderen Rezepturen, daß diese nicht in der Lage waren, Oversprays bestimmter Lacke in ausreichender Weise zu entkleben und zu koagulieren und damit einem durch Verkleben oder Verstopfen der Anlagen oder Anlagenteile verursachten Ausfall der Berieselungssysteme vorzubeugen. Schwierigkeiten wurden beispielsweise immer wieder durch Ein- oder Zweikomponenten-Polyurethanlacke und sogenannte "High Solid-Lacke" verursacht, also durch Lacke, die einen ausgesprochen hohen Feststoffanteil aufwiesen. Im Zuge der Entsorgung derartiger Lacke wird immer wieder ein unerwünschter Anlagenstillstand durch unzureichende Entklebung oder Bildung nicht austragfähiger, hart agglomerierter Koagulate beobachtet.

Aufgabe der vorliegenden Erfindung war es, eine vollständige Entklebung und Koagulierung auch bei Problemlacken, insbesondere den sogenannten Wasserlacken, zu gewährleisten. Zudem sollten die eingesetzten Koaguliermittel auch bei der Entsorgung üblicher, auf Wasserbasis oder auf Ölbasis konfektionierter Lacksysteme anwendbar sein. Zudem sollten die Mittel in modernen, automatisch auf adsorptiver Basis entsorgenden Anlagen (beispielsweise den sogenannten "ESKA"-Anlagen) einsetzbar sein, in denen die entklebten Lackpartikel nicht flotiert oder sedimentiert, sondern in Dispersion gehalten werden müssen. Eine ausreichende Dispergierung der entklebten Lackpartikel war also ebenfalls Ziel der vorliegenden Erfindung.

Überraschend wurde nun gefunden, daß eine ausgezeichnete Entklebung der Lackpartikel üblicher Lacke, aber auch der Problemlacke, sowie die Bildung dispergierfähiger, auf adsorptivem Wege entsorgbarer Lackreste dann möglich ist, wenn man den Umlaufwässern von Naßabscheidern für Spritzanlagen zur Entklebung und Koagulierung von Lacken, Wachsen und/oder organischen Beschichtungsmitteln wasserlösliche Polyamidoamine mit Amid- und Aminanteilen im Gerüst eines Addukts von Alkyldiaminen, -polyaminen oder Polyalkylpolyaminen mit einer ethylenisch ungesättigten Carboxylverbindung zusetzt.

Gegenüber anorganischen Produkten zur Koagulierung treten bei der Weiterverwendung des Lackschlamms, beispielsweise bei der Ausnutzung des thermischen Energiegehaltes, keine Probleme auf. Gegenüber im Stand der Technik verwendeten Polymeren auf Melamin-Formaldehyd-Basis findet man im Kreislaufwasser kein freies Formaldehyd. Überraschenderweise wurde gefunden, daß die genannten Polyamidoamine insbesondere geeignet sind, wasserdispergierbare und Lösemittel-Decklacke zu koagulieren. In quaternierter Form eignen sie sich darüber hinaus auch für die üblicherweise schwer zu koagulierenden Füller- und Klarlacke.

Die Herstellung der erfindungsgemäß einzusetzenden Polyamidoamine, insbesondere die Herstellung linearer und verzweigtkettiger Polyamidoamine, ist in der US-A-3 305 493 beschrieben. Im allgemeinen werden daher lineare Polyamidoamine hergestellt durch in-Kontakt-Bringen von Alkyldiaminen, -polyaminen oder Polyalkylpolyaminen mit ethylenisch ungesättigten Carboxylverbindungen. Besonders bevorzugte Carboxylverbindungen im Sinne der vorliegenden Erfindung sind ausgewählt aus Alkylacrylat- oder -methacrylat, Acrylamid, Acrylsäure und Methacrylsäure.

In einer weiteren bevorzugten Ausführungsform sind die Amine ausgewählt aus Ethylendiamin, Diethylendiamin, Triethylentetramin, Tetraethylenpentamin, Pentaethylenhexamin, Hexamethylenheptamin, 1-Aminoethylpiperazyldiethylentriamin, 1-Aminoethylpiperazyltriethylentetramin, Propylendiamin, Dipropylentriamin, Butylendiamin, Aminoethylpropylendiamin, Polyethylenpolyamin und Polypropylenpolyamin mit einem durchschnittlichen Molekulargewicht von 100 bis 15000.

So hergestellte Polyamidoamine können insbesondere durch die allgemeine Formel 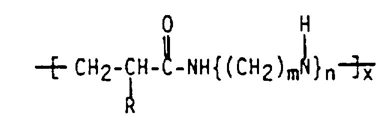 dargestellt werden, wobei R für Wasserstoff oder eine Alkylgruppe, insbesondere Methyl, m für eine ganze Zahl von 2 bis 6, n für eine ganze Zahl von 1 bis 3 und x für eine Zahl im Bereich von 10 bis 500 steht.

Die Endgruppen derartiger Polyamidoamine bestehen aus den eingesetzten Monomeren.

Die erfindungsgemäß einzusetzenden Polyamidoamine zeigen bei der Lackkoagulation hervorragende Eigenschaften: So werden die Lackpartikel nicht nur vollständig entklebt, sondern im Umlaufwasser in eine austragungsfähige Form überführt. Die Koagulate sind mit Räumern problemlos aus Beruhigungsbecken zu entfernen. Weiterhin zeigt sich als anwendungstechnischer Vorteil, daß die beschriebenen Produkte in flüssiger Form als wäßrige Lösung handhabbar sind.

Besonders bevorzugt sind lineare Polyamidoamine, insbesondere mit einem Gewichtsmittel-Molekulargewicht von wenigstens 500, insbesondere wenigstens 1000. Vorteilhafterweise sollte das Gewichtsmittel-Molekulargewicht etwa 2000 bis 10000 betragen.

In ihrer Wirkung vergleichbar, wenn nicht sogar für bestimmte Anwendungszwecke mit weiteren Vorteilen ausgestattet sind quaternierte Polyamidoamine. Die Quaternierung der entsprechenden Polyamidoamine geschieht nach an sich im Stand der Technik bekannten Verfahren zur Quaternierung von aminogruppenhaltigen Verbindungen, beispielsweise mit Alkylhalogeniden. Die prinzipielle Durchführung dieser Reaktion ist Standardlehrbüchern der organischen Chemie zu entnehmen.

Die Polyamidoamine werden vorzugsweise zum Koagulieren von wasserdispergierbaren und Lösemittel-Lacken verwendet. Dabei werden diese den Umlaufwässern von Lackentsorgungsanlagen kontinuierlich oder diskontinuierlich zugesetzt. Besonders bevorzugt ist es, die Einsatzmengen der Polyamidoamine so zu wählen, daß die Menge an Koaguliermittel im Bereich von 3 bis 30 Gew.-%, bezogen auf den Lackoverspray, liegt. Die Konzentration der Koaguliermittel im Badumlaufwasser liegt dann in einer Größenordnung von etwa 1 g/l.

In den Koaguliermitteln können weiterhin ein oder mehrere Schichtsilikat(e), beispielsweise die aus den Lehren der US-A-4 220 456, US-A-4 629 572, US-A-4 380 495 und US-A-4 701 220 sowie der europäischen Patentschrift EP-B-193 558 bekannten Verbindungen, enthalten sein, die in bevorzugten Ausführungsformen aus der Gruppe der Bentonite, Hectorite, Montmorillonite und/oder Kaoline stammen.

Kombinationen von Bentonit und Kaolin oder von Bentonit und Hectorit in Koaguliermitteln weisen ein sehr vorteilhaftes Koagulationspotential auf. Mit Koaguliermitteln, die neben Polyamidoaminen eine Kombination derartiger Schichtsilikate aufweisen, können sogar Einkomponenten-Lacke, Polyesterlacke oder Einkomponenten-Polyurethanlacke mit hohem Feststoffanteil, auch in "High Solid-Qualität", die sonst nur unzureichend entklebt und koaguliert werden konnten, aus dem Umlaufwasser von Spritzkabinen restlos entsorgt werden.

Bei der erfindungsgemäßen Verwendung von Polyamidoaminen in üblichen Koaguliermitteln können anstelle von oder zusätzlich zu den oben genannten Komponenten die aus der Lehre der GB-A-1 512 022 bekannten Stoffe, wie ein oder mehrere wasserlösliche Aluminiumsalze und/oder Calciumsalze und/oder Magnesiumsalze enthalten sein, wobei aus der Gruppe der genannten Salze die Nitrate, Chloride und/oder Sulfate der genannten Metalle besonders bevorzugt sind. Derartige Salze können - sofern vollständig wasserlöslich - zu einer guten Entklebung und Dispergierung auch von Partikelchen solcher Lacke beitragen, die im Stand der Technik nicht oder nur unzureichend entsorgt werden konnten.

Im Sinne der vorliegenden Erfindung können die Polyamidoamine auch in und/oder zusammen mit den nachfolgenden literaturbekannten Lack-koaguliermitteln eingesetzt werden:
- Wäßrige Wachsdispersionen, die nach der Lehre der DE-C-27 58 873 bzw. DE-C-34 21 289 im wesentlichen aus Montanwachs, Carnaubäwachs und/oder Paraffinabkömmlingen bestehen.
- Wäßrige Konzentrate von Ethylen-acrylsäure-copolymerisaten, die nach der Lehre der DE-A-38 10 166 aus 8 bis 25 Gew.-% Acrylsäureeinheiten und 92 bis 75 Gew.-% Ethyleneinheiten, bezogen auf die Säureform des Copolymerisats, bestehen und als Salz einer anorganischen oder organischen Base, vorzugsweise in Form von Alkalimetall-, Ammonium-, Amin- oder Alkanolaminsalzen, vorliegen.
- Wäßrige Talkumdispersionen, die nach der Lehre der EP-B-117 586, DE-A-34 05 451 und US-A-4 496 374 im wesentlichen aus Talkum, wasserlöslichen Polyhydroxyverbindungen, Calciumsalzen und Zinkstearat bestehen.
- Wäßrige Tonerdedispersionen, die nach der Lehre der DE-C-38 17 251 Pseudoböhmit oder Böhmit-Tonerde (Al₂O₃) neben üblichen Schaumdrückern enthalten.

Zusammen mit oder anstelle von einer oder mehreren der oben genannten, üblicherweise in derartigen Koaguliermitteln enthaltenen Stoffen können in den Koaguliermitteln Polyethylenimine enthalten sein, die durch Protonierung oder Alkylierung kationisch modifiziert sind. Derartige Polyethylenimine, die beispielsweise aus der Lehre der DE-A-33 16 878 bekannt sind, können mit Vorteil zusammen mit den oben genannten Calciumsalzen und/oder Magnesiumsalzen verwendet werden und liegen bevorzugterweise in einer Menge vor, die einem Molverhältnis Salz : Polyethylenimin von 50 : 1 bis 1 : 1 entspricht. Die Polyethylenimine sind entweder durch Protonierung oder Alkylierung, in der Regel durch Methylierung des Stickstoffs kationisch modifiziert, d.h. in die entsprechenden Ammoniumsalze überführt. Der Modifizierungsgrad ist dabei unterschiedlich und hängt ab vom neutralen Ausgangspolymeren, von der entsprechenden Säure zur Protonierung bzw. von dem entsprechenden Alkylierungsreagenz zur Alkylierung. Tertiäre Stickstoffatome derartiger Polymerer werden nicht vollständig protoniert bzw. alkyliert. Es sind protonierte und/oder alkylierte, bevorzugt methylierte Polyethylenimine verwendbar, die Molekularmassen im Bereich von 5 x 10⁴ bis 5 x 10⁷, vorzugsweise im Bereich von 7,5 x 10⁴ bis 5 x 10⁶, aufweisen.

Neben den Polyamidoaminen können in den Koaguliermitteln auch Molybdate, insbesondere wasserlösliche Molybdatsalze, in bevorzugten Ausführungsformen der Erfindung Alkalimetall- und/oder Ammoniumsalze der Molybdänsäure und/oder Isopolymolybdänsäure, anwesend sein. Von diesen sind die Natrium- oder Aluminiummolybdate, insbesondere Na₂MoO₄, besonders bevorzugt. Koaguliermittel, die neben anderen, in derartigen Mitteln üblichen Stoffen Natriummolybdate enthalten, sind in der Lage, Nebel auch solcher Lacktypen vollständig zu entkleben und zu entsorgen, deren Behandlung mit Koaguliermitteln aus dem Stand der Technik als problematisch, wenn nicht sogar als unmöglich angesehen worden war. Im Sinne einer kontinuierlichen Dosierung von Molybdänverbindungen in das Umlaufwasser von Lackspritzkabinen haben sich Mengen von 0,02 bis 5 ppm pro Stunde, vorzugsweise 0,5 bis 2,5 ppm pro Stunde, besonders bewährt. Die Verwendung solcher Molybdänverbindungen zur Lack-Koagulierung wurde in der unveröffentlichten deutschen Patentanmeldung P 40 25 729.0 der Anmelderin beschrieben.

Auch wenn mit Koaguliermitteln, die in ihrer Zusammensetzung der obigen Beschreibung entsprechen, hervorragende synergistische Ergebnisse erzielt werden können, so ist es grundsätzlich darüber hinaus möglich, besonderen Anforderungen dadurch Rechnung zu tragen, daß man ihnen zusätzlich weitere übliche Wirkstoffe und/oder Hilfsstoffe zusetzt. Die Koaguliermittel können beispielsweise zusammen mit den erfindungsgemäß enthaltenen Polyamidoaminen die aus der DE-A-34 12 763 bekannten Stoffe, wie Cyanamid und/oder Dicyandiamid und/oder Cyanamid-Salze, enthalten. Eine äußerst wirksame Koagulierung von Lacken und anderen organischen Beschichtungsmitteln, insbesondere von Zweikomponenten-Polyurethanlacken, gelingt überraschenderweise bei Verwendung einer Kombination, die neben den erfindungsgemäß einzusetzenden Polyamdioaminen Cyanamid oder Dicyandiamid (1-Cyanoguanidin) oder Calciumcyanamid enthält, wobei diese Komponenten besonders gut wirksam sind, wenn sie im Umlaufwasser von Lackspritzkabinen, also in wäßriger Lösung, bei pH-Werten zwischen 3 und 12, bevorzugt zwischen 6,5 und 8,5, enthalten sind. Neben einer überraschend guten Entklebung der Lackpartikelchen und einer Agglomeration zu einem gut dispergierten und in dieser Form austragungsfähigen Koagulat haben die genannten Cyanamid-Derivate den Vorteil, daß sich Überschüsse, die nicht an der Entklebung und Agglomeration der Lackpartikelchen beteiligt sind, in Wasser langsam und kontinuierlich rückstandsfrei zu NH₃ und C02 auflösen und daher das Umlaufwasser in keiner Weise belasten. Der entstehende Ammoniak ist in Lösung wie auch im Dampfschwadenraum zudem als Korrosionsinhibitor für Anlagenteile aus Eisen und Stahl wirksam.

Als zusätzliche Wirkstoffe können auch die aus der Lehre der DE-A-15 17 409 bekannten Alkali- und Erdalkalisalze, wie Hydroxide, Carbonate und/oder Hydrogencarbonate zusammen mit den Polyamidoaminen in den Koaguliermitteln mit Erfolg eingesetzt werden. Weiter spezielle Anforderungen an die Lackkoaguliermittel können z.B. die Einstellung eines bestimmten pH-Werts oder die antimikrobielle Ausrüstung der Koaguliermittel sein. Ein geeigneter Zusatz für diesen Zweck ist beispielsweise Borsäure, die antimikrobielle Wirkung besitzt und gegebenenfalls auch zur pH-Wert-Einstellung beitragen kann. Der pH-Wert-Einstellung dienen gegebenenfalls Zusätze von Phosphorsäure, organischen Säuren, wie Citronensäure, oder anderen, nicht korrosiven Säuren bzw. deren sauren Salzen. Zur pH-Wert Einstellung von sauren Lösungen werden basische Verbindungen, wie Alkalimetallhydroxide, Amine oder Alkanolamine, bevorzugt eingesetzt. Zusätzlich oder stattdessen können auch Biozide eingesetzt werden. Beispielhaft dafür sind Formaldehyd, Isothiazoline und deren Derivate sowie Pyridin-N-oxid und dessen Derivate zu nennen.

Als weitere mögliche Bestandteile der polyamidoaminhaltigen Koaguliermittel kommen auch Korrosionsinhibitoren und zusätzliche Antischaummittel in Frage. Als Korrosionsinhibitoren werden wasserlösliche Salze von Phosphonsäuren und Zinksalze, bevorzugt das Natriumsalz der 2-Phosphonobutan-1.2.4-tricarbonsäure oder das Zinksalz des 2-Pyridinthiol-1-oxids verwendet. Als Antischaummittel hat sich neben den für diesen Zweck aus dem Stand der Technik bekannten Mitteln das Dehydran R^{R} (Henkel KGaA) bewährt.

Gemäß einer besonder bevorzugten Ausführungsform der vorliegenden Erfindung enthalten die Lackkoagulierungsmittel mindestens eine der nachfolgend genannten Komponenten a) bis i) als Wirkstoffe:
a) 0,5 bis 99 Gew-.% mindestens eines anorganischen Schichtsilikates, vorzugsweise aus der Gruppe der Montmorillonite, Bentonite, Hectorite oder Kaoline,
b) 0,5 bis 99 Gew.-% mindestens eines Salzes von Calcium, Magnesium, Aluminium oder Eisen, vorzugsweise in Form des Nitrats, Chlorids oder Sulfats,
c) 5 bis 20 Gew.-% mindestens eines Wachses, vorzugsweise in Form einer wäßrigen Dispersion,
d) 2 bis 25 Gew.-% mindestens eines Ethylen-acrylsäure-copolymerisats, das 8 bis 25 Gew.-% Acrylsäureeinheiten und 92 bis 75 Gew.-% Ethyleneinheiten, bezogen auf die Säureform des Copolymerisats, aufweist und als Salz einer anorganischen oder organischen Base vorliegt, vorzugsweise in Form eines wäßrigen Konzentrats,
e) 0,5 bis 99 Gew.-% an Talkum,
f) 0,5 bis 99 Gew.-% an Tonerden,
g) 0,5 bis 5 Gew.-% mindestens eines Polyethylenimins und/oder protonierte oder alkylierte Derivate des Polyethylenimins,
h) wasserlösliche Alkalimetall- und/oder Ammoniumsalze der Molybdänsäure und/oder Isopolymolybdänsäure, vorzugsweise Natriummolybdat, und
i) Polyelektrolyte auf der Basis quaternärer Methacrylsäureester, beispielsweise solche der ROHAFLOC^{R}-Reihe (Röhm GmbH).

In einer weiteren bevorzugten Ausführungsform der vorliegenden Erfindung enthalten die oben genannten Polyamidoamin-haltigen Koaguliermittel zusätzlich mindestens eine der nachfolgend genannten Komponenten j) bis l):
j) mindestens eine Verbindung aus der Gruppe Cyanamid, Dicyandiamid oder der Cyanamid-Salze, vorzugsweise Dicyandiamid oder Calcium-Cyanamid,
k) mindestens ein Hydroxid, Carbonat oder Hydrogencarbonat der Alkali- oder Erdalkalimetalle,
l) in Lack-Koaguliermitteln übliche Wirk- und/oder Hilfsstoffe, vorzugsweise Biozide, pH regulierende Stoffe, Korrosionsinhibitoren, Antischaummittel oder Solubilisierungsmittel.

Die Herstellung der Lackkoaguliermittel aus den einzelnen Komponenten ist dem Fachmann aus dem Stand der Technik geläufig.

Die Dosierung der erfindungsgemäßen Koaguliermittel erfolgt entweder kontinuierlich mittels geeigneter, gegebenenfalls automatisierbarer Dosiergeräte oder diskontinuierlich, z.B. einmal pro Tag. Dabei werden dem Umlaufwasser die erfindungsgemäßen Koaguliermittel in einer solchen Menge zugesetzt, daß ihre Gewichtsmengen beispielsweise 3 bis 100 % der berechneten Mengen an Lackoverspray, in bevorzugter Weise jedoch 5 bis 30 Gew.-%, ausmachen. Insgesamt muß bei der Dosierung sichergestellt sein, daß genügend Polyamidoamin in den Umlaufwässern enthalten ist, um gegebenenfalls zusammen mit den anderen genannten Stoffen eine vollständige Entklebung und Koagulation der Lackpartikel sicherzustellen.

Ein weiterer Gegenstand der vorliegenden Erfindung betrifft ein Verfahren zur Entklebung und Koagulierung von Lacken, Wachsen und anderen organischen Beschichtungsmitteln, das dadurch gekennzeichnet ist, daß man dem Umlaufwasser in Naßabscheidern von Spritzanlagen Polyamidoamine wie oben beschrieben, gegebenenfalls in Kombination mit literaturbekannten weiteren Koaguliermitteln und/oder Koagulierhilfsmitteln zusetzt.

In einer bevorzugten Ausführungsform des erfindungsgemäßen Verfahrens stellt man den pH-Wert des Umlaufwassers entweder auf einen schwach sauren Wert im Bereich von 2,5 bis 5 oder einen schwach alkalischen Bereich von 7,5 bis 9,5 ein.

Bei Zugrundelegung der angegebenen Konzentrationen kann eine vollständige Entklebung des Lackpartikel auch bei solchen Lacken in vorteilhafter Weise erreicht werden, die sich mit bisher aus dem Stand der Technik bekannten Koaguliermitteln nicht oder nur unzureichend entkleben ließen. Die entklebten Lackpartikel lassen sich ausgezeichnet zu größeren Agglomeraten koagulieren, die nicht an den Wänden der Leitungen, Pumpen und Behältnisse anhaften, sondern in der Dispersion gleichmäßig verteilt sind und sich auch durch automatische Anlagen problemlos entsorgen lassen. Letzteres Erfordernis ist besonders vorteilhaft bei den zunehmend in Gebrauch kommenden automatischen Lackentsorgungslinien, die auf der Basis einer adsorptiven Entsorgung der Lackoversprays arbeiten ("ESKA"-Anlagen).

Die Erfindung wird durch die nachfolgenden Beispiele näher erläutert.

### Beispiele

### Herstellungsbeispiel

Analog US-A-3 305 493 wurden 36,9 Gew.-Teile 1,2-Diaminoethan in einem Edelstahlreaktionsgefäß mit Rührsystem vorgelegt. Anschließend werden 52,8 Gew.-Teile Methylacrylat zulaufen gelassen. Die Innentemperatur stieg dabei an und wurde durch Anlegen einer äußeren Kühlung auf 65 bis 70 °C gehalten. Der Ansatz wurde innerhalb einer halben Stunde auf 120 °C erwärmt und eine weitere Stunde unter Rückflußbedingungen gehalten. Wegen der Methanolbildung sank die Innentemperatur dabei auf 90 bis 95 °C ab.

Nach Umstellung auf Destillation und Entfernung von 19,7 Gew.-Teilen Methanol bei einer Manteltemperatur von etwa 130 bis 140 °C wurde Methanol ausgetragen. Bei Erreichen einer Innentemperatur von 120 °C wurde eine weitere halbe Stunde mit weiterer Temperaturerhöhung innegehalten. Anschließend wurde die Temperatur stufenweise erhöht. Bei Erreichen einer Innentemperatur von 150 °C wurde eine Stunde und bei Erreichen einer Innentemperatur von 165 °C eine weitere halbe Stunde mit der Temperaturerhöhung innegehalten.

Der Ansatz wurde anschließend auf 100 °C abgekühlt und unter kräftigem Rühren 30 Gew.-Teile Wasser, demineralisiert, unter kräftigem Rühren zulaufen gelassen.

Es wurde eine leicht aminartig riechende, klare, organgefarbene, sirupartige Flüssigkeit erhalten.

### Quaternierung

Analog der EP-B-0 092 883 wurde mit molar gleichen Mengen Methylchlorid anstelle von Epichlorhydrin quaterniert.

### Ausführungsbeispiele

In den folgenden Beispielen wurde die jeweils angegebene Menge an Koaguliermittel in 500 ml Wasser gelöst und mit 2,5 g spritzfertigem Wasserlack (Hydrofüller Hellgrau BASF, FQ 89/600) versetzt. Man ließ 10 min bei 100 UpM rühren und bewertete nach dem Schema:
- Koagulierung: K1 = entklebt
K2 = austragsfähig (Oberfläche entklebt, innen noch klebrig)
K3 = nicht entklebt
- Aussehen: A1 = feindispers
A2 = mitteldispers
A3 = grobdispers
A4 = Klumpen

In einen 1 l-Schüttelzylinder wurden zu 500 ml Wasser ca. 300 mg der zu testenden Verbindung gegeben und 10 mal geschüttelt. Die entstandene Schaumhöhe wurde abgelesen, der Schaumzerfall innerhalb von 10 min beurteilt.

In einer 5 l-Laborspritzkabine wurden die unten angegebenen Mengen an den zu testenden Koaguliermitteln in dem Umlaufwasser gelöst. Anschließend wurde der oben genannte Wasserlack bzw. ein Lösemittellack (LM Daimler Benz, Einbrennlack Artikweiß DB-9147) versprüht. Die Beurteilung der Koagulierwirkung erfolgte nach obigem Schema.

### Beispiel 1

1,5 g/l Polyamidoamin gemäß Herstellungsbeispiel.

### Beispiel 2

1,5 g/l Polyamidoamin gemäß Quaternierung.

### Beispiel 3

6,4 g/l Polyamidoamin mit Quaternierung in Seitenkette.

### Beispiel 4

3,0 g/l Polyamidoamin mit Quaternierung in Seitenkette.

### Beispiel 5

1,7 g/l Polyamidoamin gemäß Herstellungsbeispiel, dessen wäßrige Lösung mit konz. H₂SO₄ auf pH 7 eingestellt wurde.

### Beispiel 6

1,4 g/l Polyamidoamin gemäß Beispiel 1, 20 g wasserdispergierbarer Lack.

### Beispiel 7

1,4 g/l Polyamidoamin gemäß Beispiel 1, 20 g Lösemittellack.

### Beispiel 8

0,9 g/l Polyamidoamin gemäß Beispiel 2, 20 g wasserdispergierbarer Lack.

### Beispiel 9

1,1 g/l Polyamidoamin gemäß Beispiel 5, 20 g wasserdispergierbarer Lack.

### Beispiel 10

1,1 g/l Polyamidoamin gemäß Beispiel 5, 20 g Lösemittellack.

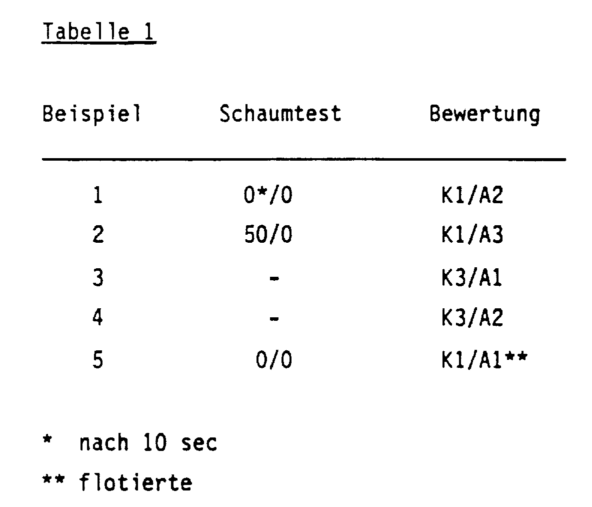

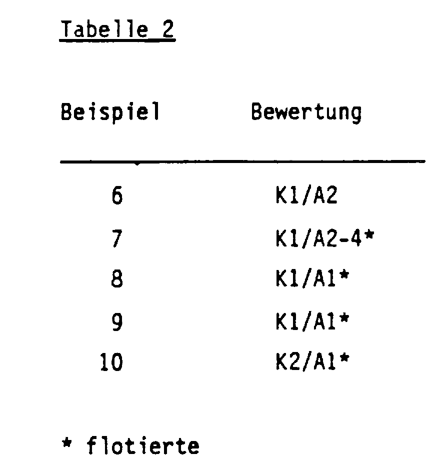

Die folgenden Versuche wurden in einer Technikums-Spritzlackieranlage durchgeführt, die einen Wasserinhalt von 90 l aufwies.

Dem Umlaufwasser wurden bei laufender Pumpe jeweils 0,2 g/l Koaguliermittel gemäß Beispiel 11 bzw. 0,3 g/l gemäß Beispiel 12 und Beispiel 13 zugegeben. Anschließend wurden mit einer Lackspritzpistole jeweils 1 g/l, bezogen auf das Umlaufwasser, der spritzfähigen Lacke gleichmäßig auf das Wasser aufgesprüht. Dies entsprach einer Dosierung von 20 % (Beispiel 11) bzw. 30 % (Beispiele 12 und 13), bezogen auf den eingetragenen Lackoverspray. In den Beispielen 11, 12 und 13 wurde als Lösungsmittellack 2K-Klarlack, FF 95-0110 (Mischungsverhältnis 100 : 30 mit Härter SC 29-0160) der BASF und in den Beispielen 11a, 12a und 13a als Wasserlack Indischrot, Hydro-Basecoat, Fa. Herberts, eingesetzt.

Zur Bewertung dienten die Kriterien der oben genannten Bewertungsskala. Die Ergebnisse werden in der Tabelle 3 wiedergegeben, die im Anschluß an die Inhaltsstoffe der Beispiele aufgeführt ist.

### Beispiel 11

30 Gew.-% 70 %iges Polyamidoamin gemäß Herstellungsbeispiel.
2 Gew.-% Natriummolybdat.

### Beispiel 12

30 Gew.-% 70 %iges Polyamidoamin gemäß Herstellungsbeispiel.
15 Gew.-% eines quaternären Polyelektrolyten der ROHAFLOC^{R}-Reihe (Polyelektrolyt auf Basis eines quaternären Methacrylsäureesters, Röhm GmbH, ROHAFLOC^{R} KL 915).

### Beispiel 13

15 Gew.-% 70 %iges Polyamidoamin gemäß Herstellungsbeispiel.
15 Gew.-% des Polyelektrolyten gemäß Beispiel 12,
2 Gew.-% Dicyandiamid.

**Tabelle 3**

| Beispiel | Bewertung |
|---|---|
| 11 | K2/A3 |
| 11a | K1/A1 |
| 12 | K1/A1 |
| 12a | K1/A1 |
| 13 | K1/A1 |
| 13a | K1/A1 |

### Beispiel 14

Gemäß den ersten Ausführungsbeispielen wurde zu 1,3 g eines 58 Gew.-%igen quaternierten Polyamidoamins in 500 ml Wasser kontinuierlich wasserdispergierbarer Lack zugesetzt. Nach der Zugabe von insgesamt 22 g Lack konnte keine Koagulierung mehr festgestellt werden. Dies entspricht einer Dosierung von 3,4 % Koaguliermittel, bezogen auf Lack-Overspray.

### Beispiel 15

Entsprechend Beispiel 14 wurden zu 1,1 g eines 70 Gew.-%igen Polyamidoamins gemäß Herstellbeispiel in 500 ml Wasser 12 g wasserdispergierbarer Lack bis zur erschöpfenden Koagulierung zugesetzt. Dies entspricht einer Dosierung von 6,2 % Koaguliermittel, bezogen auf Lack-Overspray.

## Patentansprüche

1. Verwendung von wasserlöslichen gegebenenfalls quaternisierten Polyamidoaminen mit Amid- und Aminanteilen im Gerüst eines Addukts von Alkyldiaminen, Polyaminen oder Polyalkylpolyaminen mit einer ethylenisch ungesättigten Carboxylverbindung in Umlaufwässern von Naßabscheidern für Spritzlackieranlagen zur Entklebung und Koagulierung von Lacken, Wachsen und/oder organischen Beschichtungsmitteln.

2. Verwendung nach Anspruch 1, wobei die Carboxylverbindung ausgewählt ist aus Alkylacrylat oder -methacrylat, Acrylamid, Acrylsäure und Methacrylsäure.

3. Verwendung nach Anspruch 1 oder 2, wobei die Amine ausgewählt sind aus Ethylendiamin, Triethylentetramin, Tetraethylenpentamin, Pentaethylenhexamin, Hexamethylenheptamin, 1-Aminoethylpiperazyldiethylentriamin, 1-Aminoethylpiperazyltriethylentetramin, Propylendiamin, Dipropylentriamin, Butylendiamin, Aminoethylpropylendiamin, Polyethylenpolyamin und Polypropylenaminen mit einem durchschnittlichen Molekulargewicht von 100 bis 15000.

4. Verwendung nach einem oder mehreren der Ansprüche 1 bis 3, dadurch gekennzeichnet, daß man Polyamidoamine der allgemeine Formel 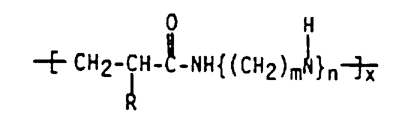 einsetzt, wobei
R für Wasserstoff oder eine Alkylgruppe, insbesondere Methyl,
m für eine ganze Zahl von 2 bis 6,
n für eine ganze Zahl von 1 bis 3 und
x für eine Zahl im Bereich von 10 bis 500 steht.

5. Verwendung nach Anspruch 4, dadurch gekennzeichnet, daß man lineare Polyamidoamine einsetzt.

6. Verwendung nach Anspruch 5, dadurch gekennzeichnet, daß man lineare Polyamidoamine mit einem Gewichtsmittel-Molekulargewicht von wenigstens 500, insbesondere wenigstens 1000, einsetzt.

7. Verwendung nach Anspruch 6, dadurch gekennzeichnet, daß das Gewichtsmittel-Molekulargewicht der Polyamidoamine 2000 bis 10000 beträgt.

8. Verwendung nach einem oder mehreren der Ansprüche 1 bis 7, dadurch gekennzeichnet, daß man die Polyamidoamine in vollständig oder teilweise quaternierter Form einsetzt.

9. Verwendung nach einem oder mehreren der Ansprüche 1 bis 8, dadurch gekennzeichnet, daß man die Polyamidoamine in den Umlaufwassern in einer Menge von 3 bis 30 Gew.-%, bezogen auf die Menge an Lacken, Wachsen und/oder Beschichtungsmitteln, einsetzt.

10. Verwendung nach einem oder mehreren der Ansprüche 1 bis 9, dadurch gekennzeichnet, daß die Polyamidoamine zusammen mit üblichen Lackkoaguliermitteln eingesetzt werden.

11. Verwendung nach einem oder mehreren der Ansprüche 1 bis 10, dadurch gekennzeichnet, daß die Lackkoaguliermittel mindestens eine der nachfolgend genannten Komponenten a) bis i) als Wirkstoffe enthalten:
a) 0,5 bis 99 Gew-.% mindestens eines anorganischen Schichtsilikates, vorzugsweise aus der Gruppe der Montmorillonite, Bentonite, Hectorite oder Kaoline,
b) 0,5 bis 99 Gew.-% mindestens eines Salzes von Calcium, Magnesium, Aluminium oder Eisen, vorzugsweise in Form des Nitrats, Chlorids oder Sulfats,
c) 5 bis 20 Gew.-% mindestens eines Wachses, vorzugsweise in Form einer wäßrigen Dispersion,
d) 2 bis 25 Gew.-% mindestens eines Ethylen-acrylsäure-copolymerisats, das 8 bis 25 Gew.-% Acrylsäureeinheiten und 92 bis 75 Gew.-% Ethyleneinheiten, bezogen auf dei Säureform des Copolymerisats, aufweist und als Salz einer anorganischen oder organischen Base vorliegt, vorzugsweise in Form eines wäßrigen Konzentrats,
e) 0,5 bis 99 Gew.-% an Talkum,
f) 0,5 bis 99 Gew.-% an Tonerden,
g) 0,5 bis 5 Gew.-% mindestens eines Polyethylenimins und/oder protonierte oder alkylierte Derivate des Polyethylenimins,
h) wasserlösliche Alkalimetall- und/oder Ammoniumsalze der Molybdänsäure und/oder Isopolymolybdänsäure, vorzugsweise Natriummolybdat, und
i) Polyelektrolyte auf der Basis quaternärer Methacrylsäureester.

12. Verwendung nach Anspruch 11, dadurch gekennzeichnet, daß die Koaguliermittel zusätzlich mindestens eine der nachfolgend genannten Komponenten j) bis l) enthalten:
j) mindestens eine Verbindung aus der Gruppe Cyanamid, Dicyandiamid oder der Cyanamid-Salze, vorzugsweise Dicyandiamid oder Calcium-Cyanamid,
k) mindestens ein Hydroxid, Carbonat oder Hydrogencarbonat der Alkali- oder Erdalkalimetalle,
l) in Lack-Koaguliermitteln übliche Wirk- und/oder Hilfsstoffe, vorzugsweise Biozide, pH regulierende Stoffe, Korrosionsinhibitoren, Antischaummittel oder Solubilisierungsmittel.

13. Verwendung nach einem oder mehreren der Ansprüche 1 bis 12, dadurch gekennzeichnet, daß die Mittel in Form von Pulvern, wäßrigen Lösungen oder wäßrigen Dispersionen konfektioniert werden.

14. Verfahren zur Entklebung und Koagulation von Lacken, Wachsen und anderen organischen Beschichtungsmitteln, dadurch gekennzeichnet, daß man dem Umlaufwasser in Naßabscheidern von Spritzlackieranlagen eine Polyamidoaminverbindung nach den Ansprüchen 1 bis 13 zusetzt.

15. Verfahren nach Anspruch 14, dadurch gekennzeichnet, daß der pH-Wert des Umlaufwassers im Bereich von 1 bis 14, insbesondere im Bereich von 2,5 bis 5 oder im Bereich von 7,5 bis 9,5 liegt.

## Claims

1. The use of water-soluble, optionally quaternized polyamidoamines with amide and amine components in the skeleton of an adduct of alkyldiamines, polyamines or polyalkyl polyamines with an ethylenically unsaturated carboxyl compound in circuit waters of wet separators for spray lacquering lines for the denaturing and coagulation of lacquers, waxes and/or organic coating compositions.

2. The use claimed in claim 1, characterized in that the carboxyl compound is selected from alkyl acrylate or methacrylate, acrylamide, acrylic acid and methacrylic acid.

3. The use claimed in claim 1 or 2, characterized in that the amines are selected from ethylenediamine, triethylenetetramine, tetraethylenepentamine, pentaethylenehexamine, hexamethyleneheptamine, 1-aminoethyl piperazyl diethylenetriamine, 1-aminoethyl piperazyl triethylenetetramine, propylenediamine, dipropylenetriamine, butylenediamine, aminoethyl propylenediamine, polyethylene polyamine and polypropylene amines with an average molecular weight of 100 to 15,000.

4. The use claimed in one or more of claims 1 to 3, characterized in that polyamidoamines corresponding to the following general formula: 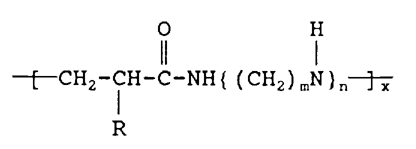 in which R is hydrogen or an alkyl group, more particularly methyl, m is an integer of 2 to 6, n is an integer of 1 to 3 and x is a number of 10 to 500,
are used.

5. The use claimed in claim 4, characterized in that linear polyamidoamines are used.

6. The use claimed in claim 5, characterized in that linear polyamidoamines with a weight average molecular weight of at least 500 and, more particularly, of at least 1,000 are used.

7. The use claimed in claim 6, characterized in that the weight average molecular weight of the polyamidoamines is in the range from 2,000 to 10,000.

8. The use claimed in one or more of claims 1 to 7, characterized in that the polyamidoamines are used in completely or partly quaternized form.

9. The use claimed in one or more of claims 1 to 8, characterized in that the polyamidoamines are used in the circuit waters in a quantity of 3 to 30% by weight, based on the quantity of lacquers, waxes and/or coating compositions.

10. The use claimed in one or more of claims 1 to 9, characterized in that the polyamidoamines are used in conjunction with typical lacquer coagulants.

11. The use claimed in one or more of claims 1 to 10, characterized in that the lacquer coagulants contain at least one of the following components a) to i) as active substances:
a) 0.5 to 99% by weight of at least one inorganic layer silicate, preferably from the group of montmorillonites, bentonites, hectorites or kaolins,
b) 0.5 to 99% by weight of at least one salt of calcium, magnesium, aluminium or iron, preferably in the form of the nitrate, chloride or sulfate,
c) 5 to 20% by weight of at least one wax, preferably in the form of an aqueous dispersion,
d) 2 to 25% by weight of at least one ethylene/acrylic acid copolymer which contains 8 to 25% by weight of acrylic acid units and 92 to 75% by weight of ethylene units, based on the acid form of the copolymer, and which is present as the salt of an inorganic or organic base, preferably in the form of a water-containing concentrate,
e) 0.5 to 99% by weight of talcum,
f) 0.5 to 99% by weight of aluminas,
g) 0.5 to 5% by weight of at least one polyethyleneimine and/or protonated or alkylated derivatives of polyethyleneimine,
h) water-soluble alkali metal and/or ammonium salts of molybdic acid and/or isopolymolybdic acid, preferably sodium molybdate, and
i) polyelectrolytes based on quaternary methacrylates.

12. The use claimed in claim 11, characterized in that the coagulants additionally contain at least one of the following components j) to l):
j) at least one compound from the group consisting of cyanamide, dicyanodiamide or cyanamide salts, preferably dicyanodiamide or calcium cyanamide,
k) at least one hydroxide, carbonate or hydrogen carbonate of the alkali or alkaline earth metals,
l) active substances and/or auxiliaries typically encountered in lacquer coagulants, preferably biocides, pH regulators, corrosion inhibitors, antifoam agents or solubilizers.

13. The use claimed in one or more of claims 1 to 12, characterized in that the coagulants are made up in the form of powders, aqueous solutions or aqueous dispersions.

14. A process for denaturing and coagulating lacquers, waxes and other organic coating compositions, characterized in that a polyamidoamine compound according to Claims 1 to 13 is added to the circuit water of wet separators of spray painting lines.

15. A process as claimed in claim 14, characterized in that the pH value of the circuit water is in the range from 1 to 14 and more particularly in the range from 2.5 to 5 or in the range from 7.5 to 9.5.

## Revendications

1. Utilisation de polyamidoamines hydrosolubles quaternisées le cas échéant avec des fractions amide et amine dans la structure d'un produit d'addition d'alkyldiamines, de polyamines ou de polyalkylpolyamines avec un composé carboxyle éthyléniquement insaturé dans les eaux de circulation de séparateurs par voie humide pour des unités de pulvérisation de peinture au pistolet pour dépoisser et coaguler des peintures des cires et/ou des moyens de revêtement ou enduction organiques.

2. Utilisation selon la revendication 1, où le composé carboxyle est choisi parmi un acrylate ou un méthacrylate d'alkyle, un acrylamide, l'acide acrylique et l'acide méthacrylique.

3. Utilisation selon la revendication 1 ou 2, où les amines sont choisies parmi les éthylènediamine, triéthylènetétramine, tétraéthylènepentamine, pentaéthylènehexamine, hexaméthylèneheptamine, 1-aminoéthylpipérazyldiéthylènetriamine, 1-aminoéthylpiperazyltriéthylènetétramine, propylènediamine, dipropylènetriamine, butylènediamine, aminoéthylpropylènediamine, polyéthylènepolyamine et polypropylèneamines, avec un poids moléculaire moyen de 100 à 15.000.

4. Utilisation selon l'une ou plusieurs des revendications 1 à 3, caractérisée en ce qu'on utilise des polyamidoamines de formule générale : 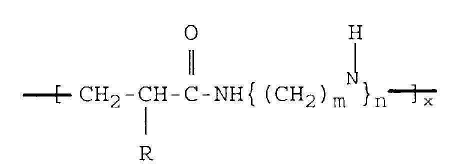
R représente un hydrogène ou un groupe alkyle, notamment le méthyle,
m est un nombre entier de 2 à 6,
n est un autre nombre entier de 1 à 3 et,
x est un nombre dans le domaine de 10 à 500.

5. Utilisation selon la revendication 4, caractérisée en ce qu'on utilise des polyamidoamines linéaires.

6. Utilisation selon la revendication 5, caractérisée en ce qu'on utilise des polyamidoamines d'un poids moléculaire moyen en poids d'au moins 500, notamment au moins 1000.

7. Utilisation selon la revendication 6, caractérisée en ce que le poids moléculaire moyen en poids des polyamidoamines représente 2000 à 10.000.

8. Utilisation selon l'une ou plusieurs des revendications 1 à 7, caractérisée en ce qu'on utilise les polyamidoamines sous forme totalement ou partiellement quaternisée.

9. Utilisation selon l'une ou plusieurs des revendications 1 à 8, caractérisée en ce qu'on utilise les polyamidoamines dans les eaux de circulation en une quantité de 3 à 30 % en poids, par rapport à la quantité de peintures, de cires et/ou de moyens de revêtement.

10. Utilisation selon l'une ou plusieurs des revendications 1 à 9, caractérisée en ce qu'on utilise les polyamidoamines en présence des coagulants habituels de peinture.

11. Utilisation selon l'une ou plusieurs des revendications 1 à 10, caractérisée en ce que les coagulants contiennent au moins l'un des composants cités ci-dessous de a) à i) comme composants actifs :
a) 0,5 à 99 % en poids d'au moins un silicate feuilleté minéral, de préférence du groupe des montmorillonite, bentonite, hectonite ou kaolins,
b) 0,5 à 99 % en poids d'au moins un sel de calcium, magnésium, aluminium ou fer, de préférence sous forme du nitrate, du chlorure ou du sulfate,
c) 5 à 20 % en poids d'une cire, de préférence sous forme d'une dispersion aqueuse,
d) 2 à 25 % en poids d'au moins un copolymère éthylène-acide acrylique, qui présente 8 à 25 % en poids d'unités acide acrylique et 92 à 75 % en poids d'unité éthylène, par rapport à la forme acide du copolymère, et qui se présente sous forme de sel d'une base minérale ou organique de préférence sous forme d'un concentré aqueux,
e) 0,5 à 99 % en poids de talc,
f) 0,5 à 99 % en poids d'alumine,
g) 0,5 à 5 % en poids d'au moins une polyéthylèneimine et/ou de dérivés protonés ou alkylés de la polyéthylèneimine,
h) des sels hydrosolubles de métal alcalin et/ou d'ammonium d'acide molybdènique et/ou d'acide isopolymolybdènique, de préférence du molybdate de sodium et,
i) des polyélectrolytes à base de méthacrylates quaternisés.

12. Utilisation selon la revendication 11, caractérisée en ce que les coagulants contiennent en plus au moins l'un des composants cités j) à l) ci-dessous :
j) au moins un composé du groupe cyanamide, dicyandiamide ou des sels de cyanamide, de préférence dicyandiamide ou cyanamide calcique,
k) au moins un hydroxyde, carbonate ou hydrogénocarbonate des métaux alcalins ou alcaline-terreux,
l) des additifs et/ou substances actives habituellement utilisés dans les coagulants des peintures, de préférence des biocides, régulateurs de pH, inhibiteurs de corrosion, antimousse ou solubilisants.

13. Utilisation selon l'une ou plusieurs des revendications 1 à 12, caractérisée en ce que les moyens sont présentés sous forme de poudres, de solutions aqueuses ou de dispersions aqueuses.

14. Procédé de dépoissage et de coagulation de peintures, cires et autres moyens de revêtement organiques, caractérisé en ce qu'on ajoute à l'eau de circulation dans les séparateurs par vois humide des unités de pulvérisation de peinture un composé d'un polyamidoamine selon les revendications 1 à 13.

15. Procédé selon la revendication 14, caractérisé en ce que le pH de l'eau de circulation est dans un intervalle de 1 à 14, notamment dans l'intervalle de 2,5 à 5 ou dans l'intervalle de 7,5 à 9,5.
